# EUROPÄISCHE PATENTSCHRIFT

(11) **EP 2 045 045 B1**
(45) Veröffentlichungstag und Bekanntmachung des Hinweises auf die Patenterteilung: **15.09.2010**
(21) Anmeldenummer: 08009446.9
(22) Anmeldetag: 23.05.2008
(51) Int. Cl.: B25F 5/02

(54) **Elektrohandwerkzeuggerät**
Electric hand tool
Machine-outil électrique manuelle

(30) Priorität: 01.10.2007 DE 102007047030
(43) Veröffentlichungstag der Anmeldung: 08.04.2009
(73) Patentinhaber: Metabowerke GmbH, 72622 Nürtingen (DE)
(72) Erfinder: Stark, Günther, 72636 Frickenhausen (DE); Maier, Christoph, 73274 Notzingen (DE)
(74) Vertreter: Dreiss

(56) Entgegenhaltungen:
- EP-A- 0 249 037
- EP-A- 1 004 406
- EP-A- 1 832 397
- DE-A1-102005 057 269
- DE-A1-102005 057 642
- DE-U1-202006 020 017
- US-A- 4 368 556
- US-A1- 2004 163 214
- US-A1- 2005 166 741

## Beschreibung

Die Erfindung betrifft ein Elektrohandwerkzeuggerät mit einem Gehäusekörper und mit einem einen Spannkragen aufweisenden und in einer axialen Richtung auf den Gehäusekörper aufschiebbaren Zusatzhandgriff, wobei der Zusatzhandgriff in einer ersten axialen Montageposition um die axiale Richtung drehbar und in einer zweiten weiter auf den Gehäusekörper aufgeschobenen axialen Montageposition formschlüssig verdrehgesichert am Gehäusekörper gehalten ist, und mit einer in axiale Richtung wirkenden Abziehsicherungsvorrichtung, welche ein Eingriffsmittel und ein in Umfangsrichtung erstrecktes Aufnahmemittel aufweist.

Ein derartiges Elektrohandwerkzeuggerät ist beispielsweise aus DE 10 2005 057 269 A1 bekannt. Der Handgriff ist axial auf den Gehäusekörper aufschiebbar und in einer ersten axialen Montageposition um die axiale Richtung drehbar. Beim Zusammenziehen des Spannkragens greift ein rippenartiges Eingriffsmittel in das in Umfangsrichtung erstreckte und komplementär zum Eingriffsmittel ausgebildete Aufnahmemittel ein. Der Zusatzhandgriff ist dann gegen axiales Verschieben festgelegt. Im Zuge desselben Vorgangs greifen Nocken am Gehäusekörper in Aussparungen im Zusatzhandgriff ein und der Zusatzhandgriff wird dadurch formschlüssig verdrehgesichert am Gerätegehäuse gehalten. Um den Zusatzhandgriff wieder um die axiale Richtung drehen zu können, muss der Spannkragen so weit gelöst werden bis das Eingriffsmittel außer Eingriff mit dem Aufnahmemittel ist. Dies ist umständlich. Dabei hat es sich auch als nachteilig herausgestellt, dass der Zusatzhandgriff leicht in axiale Richtung abrutschen kann. Insbesondere bei einem einhändigen Bedienen kann der Zusatzhandgriff so unbeabsichtigt vom Elektrohandwerkzeuggerät abgezogen werden. Darüber hinaus hat es sich bei dem vorbekannten Elektrohandwerkzeuggerät als nachteilig erwiesen, dass der Handgriff nur in wenigen vordefinierten zweiten axialen Montagepositionen formschlüssig verdrehgesichert am Gehäusekörper festlegbar ist.

Ein ähnliches Gerät ist aus EP-A-0 249 037 bekannt. Es sieht aber nur eine axiale Montageposition vor, in der fixiert und verdreht wird.

Es ist Aufgabe der Erfindung, ein Elektrohandwerkzeuggerät der eingangs genannten Art dahingehend zu verbessern, dass die Bedienbarkeit, insbesondere die einhändige Bedienbarkeit, vereinfacht ist.

Erfindungsgemäß wird dies dadurch erreicht, dass das in Umfangsrichtung erstreckte Aufnahmemittel zugleich in axialer Richtung derart erstreckt ist, dass das Eingriffsmittel sowohl in der ersten als auch in der zweiten axialen Montageposition des Zusatzhandgriffs in Eingriff mit dem Aufnahmemittel ist und dass das Aufnahmemittel dabei einen axialen Anschlag bildet, um zu verhindern, dass der Zusatzhandgriff unbeabsichtigt von dem Gehäusekörper abgezogen wird, wenn er von der zweiten in die erste axiale Montageposition bewegt wird, um den Zusatzhandgriff zu verdrehen.

Der Zusatzhandgriff ist also aus der zweiten axialen Montageposition in die erste axiale Montageposition axial so weit verschiebbar, dass er nicht mehr formschlüssig verdrehgesichert am Gehäusekörper gehalten ist und so in eine andere Drehstellung verdreht werden kann. Dabei ist die Bewegung von der zweiten in die erste axiale Montageposition durch das Aufnahmemittel begrenzt, welches einen Anschlag bildet, wodurch ein unbeabsichtigtes Abziehen oder Verrutschen des Zusatzhandgriffs vom Gehäusekörper verhindert wird. Das Eingreifmittel ist also beim Verdrehen des Zusatzhandgriffs in der ersten axialen Montageposition stets innerhalb des Aufnahmemittels angeordnet. Dadurch ist es möglich, den Zusatzhandgriff insbesondere bei einer einhändigen Bedienung auch in schwierigen Bearbeitungspositionen einfach zu verdrehen und festzulegen.

Das Aufnahmemittel kann dabei sowohl für die erste axiale Montageposition als auch für die zweite axiale Montageposition einen Anschlag bilden. Insbesondere kann der Anschlag in der zweiten axialen Montageposition ferner so ausgebildet sein, dass Eingriffsmittel und Aufnahmemittel den Zusatzhandgriff zugleich formschlüssig verdrehgesichert am Gehäusekörper halten. Solchenfalls bilden Aufnahmemittel und Eingriffsmittel eine Verdrehsicherung.

Nach einer bevorzugten Ausführungsform ist das Eingriffsmittel am Zusatzhandgriff angeordnet. Bevorzugt ist das Eingriffsmittel durch einen radialen Vorsprung am Zusatzhandgriff gebildet. Dadurch ist das Eingriffsmittel auf besonders einfache Weise realisiert. Der radiale Vorsprung kann in Umfangsrichtung eher kurz, insbesondere nur 2 mm bis 8 mm, also eher nockenförmig ausgebildet sein.

Darüber hinaus wird ein Ausführungsbeispiel bevorzugt, bei dem das Aufnahmemittel eine in Umfangsrichtung erstreckte Nut im Gehäusekörper umfasst. Durch das Ausbilden des Aufnahmemittels als Nut ist die Abziehsicherungsvorrichtung besonders kompakt ausgebildet.

In Weiterbildung des letztgenannten Ausführungsbeispiels ist die Nut in Umfangsrichtung durchgehend, also in sich selbst mündend ausgebildet. Die Nut umschließt den Gehäusekörper also in Gänze. Von besonderem Vorteil dabei ist, dass die Nut beispielsweise im Zuge einer drehenden Bearbeitung kostengünstig in den Gehäusekörper eingebracht werden kann. Sie könnte aber auch durch aufgebrachte Ringelemente gebildet sein.

Der Handgriff kann an sich in beliebiger Weise von der ersten in die zweite axiale Montageposition überführbar sein, beispielsweise nach Art eines Bajonettverschlusses oder durch Lösen des Spannkragens und einer daraus resultierenden weitenden Bewegung quer zur axialen Richtung. Bevorzugt wird eine Weiterbildung, bei der der Handgriff von der ersten axialen Montageposition in axialer Richtung einfach linear in die zweite axiale Montageposition verschiebbar ist.

Ferner wird ein Ausführungsbeispiel bevorzugt, bei dem der Gehäusekörper mindestens einen Vorsprung oder Nocken aufweist, der mit komplementären Aussparungen im Handgriff die formschlüssige Verdrehsicherung bildet. Die Aussparungen im Handgriff sind dabei vorzugsweise auf einem Vollkreis mit jeweils gleichem Abstand zueinander angeordnet. Dadurch ist es möglich, den Handgriff in einer Vielzahl von Positionen relativ zur axialen Richtung formschlüssig verdrehgesichert festzulegen. Es ist aber auch denkbar, die Aussparungen derart unregelmäßig auf dem Vollkreis zu verteilen, dass der Zusatzhandgriff lediglich in diskreten Positionen relativ zur axialen Richtung formschlüssig verdrehgesichert festlegbar ist.

Schließlich wird eine Weiterbildung letztgenannten Ausführungsbeispiels bevorzugt, bei dem der Gehäusekörper mindestens mehrere Vorsprünge oder Nocken aufweist, wobei die Vorsprünge oder Nocken mit gleichmäßigem Abstand zueinander in Umfangsrichtung am Gehäusekörper angeordnet sind, so dass der Zusatzhandgriff in einer Vielzahl von Positionen relativ zur axialen Richtung formschlüssig verdrehgesichert festlegbar ist. Vorzugsweise sind die Vorsprünge oder Nocken nur über ein Umfangssegment von bis zu 90°, insbesondere von bis zu 60° und weiter insbesondere von bis zu 45° angeordnet.

Weitere Merkmale, Einzelheiten und Vorteile der Erfindung ergeben sich aus den beigefügten Patentansprüchen, der zeichnerischen Darstellung und nachfolgenden Beschreibung einer bevorzugten Ausführungsform der Erfindung.

In der Zeichnung zeigt:
- Figur 1: eine perspektivische teilweise Ansicht eines erfindungsgemäßen Elektrohandwerkzeuggeräts mit Zusatzhandgriff;
- Figur 2: eine teilweise Seitenansicht des Elektrohand- werkzeuggeräts nach Figur 1 ohne Zusatzhandgriff;
- Figur 3: eine perspektivische teilweise Ansicht des Elektrohandwerkzeuggeräts nach Figur 1;
- Figur 4: eine Ansicht des Zusatzhandgriffs des erfindungsgemäßen Elektrohandwerkzeuggeräts nach Figur 1 in axialer Richtung.

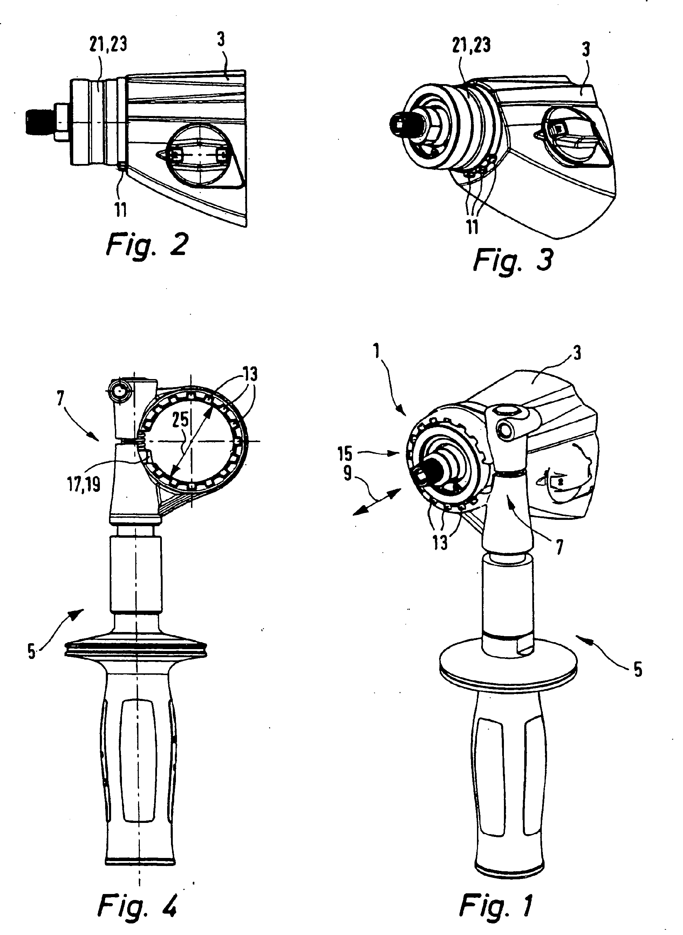

Die Figuren 1 bis 4 zeigen ein erfindungsgemäßes Elektrohandwerkzeuggerät 1 mit einem Gehäusekörper 3 und einem Zusatzhandgriff 5. Der Zusatzhandgriff weist einen Spannkragen 7 auf und ist in einer axialen Richtung 9 auf den Gehäusekörper 3 aufschiebbar und um diesen in Umfangsrichtung drehbar. Figur 1 zeigt das Elektrohandwerkzeuggerät 1, bei dem sich der Zusatzhandgriff 5 in einer zweiten axialen Montageposition auf dem Gehäusekörper 3 befindet. Dabei ist der Zusatzhandgriff 5 mittels Nocken 11 am Gehäusekörper 3 und Aussparungen 13 im Spannkragen 7 des Zusatzhandgriffs 5 formschlüssig und verdrehsicher am Gehäusekörper 5 gehalten. Darüber hinaus ist der Zusatzhandgriff 5 durch eine zwischen Gehäusekörper 3 und Zusatzhandgriff 5 gebildete Abziehsicherungsvorrichtung 15 gegen ein axiales Abziehen gehalten, wobei die Abziehsicherungsvorrichtung 15 durch ein als radialer Vorsprung 17 ausgebildetes Eingriffsmittel 19 am Zusatzhandgriff 5 und durch ein eine Nut 21 umfassendes Aufnahmemittel 23 am Gehäusekörper 3 gebildet ist. Die axiale Erstreckung der Nut 21 ist dabei so gewählt, dass der radiale Vorsprung 17 sowohl in einer ersten axialen Montageposition, in der der Zusatzhandgriff 5 drehbar ist, als auch in der zweiten axialen Montageposition, in der der Zusatzhandgriff unverdrehbar ist, in die Nut 21 eingreift, so dass der Zusatzhandgriff 5 in axiale Richtung 9 nicht vom Gehäusekörper 3 abschiebbar ist.

Figuren 2 und 3 zeigen einen Teilbereich des Gehäusekörpers 3 des Elektrohandwerkzeuggeräts 1, bei dem die Nut 21 in Umfangsrichtung durchgehend ausgebildet ist. Darüber hinaus sind drei Nocken 11 vorgesehen, die jeweils in Umfangsrichtung einen gleichen Abstand zueinander aufweisen. Der Abstand der Nocken 11 entspricht dabei dem Abstand in Umfangsrichtung der komplementären Aussparungen 13 des Handgriffs 5 zueinander. Dadurch ist gewährleistet, dass der Handgriff in einer Vielzahl von Drehstellungen formschlüssig verdrehgesichert festlegbar ist.

Im Folgenden wird die Funktionsweise des erfindungsgemäßen Elektrohandwerkzeuggeräts 1 erläutert. Bei Montage des Zusatzhandgriffs 5 auf den Gehäusekörper 3 wird der Spannkragen 7 des Zusatzhandgriffs 5 so weit geöffnet, dass der Zusatzhandgriff 5 ohne Weiteres in axialer Richtung 9 auf den Gehäusekörper 3 aufschiebbar ist. Ist der Zusatzhandgriff 5 so weit auf den Gehäusekörper 3 aufgeschoben, dass der radiale Vorsprung 17 sich auf axialer Höhe der Nut 21 befindet, wird durch Spannen bzw. Zusammenziehen des Spannkragens 7, also durch Reduzierung seines Innendurchmessers 25, der radiale Vorsprung 17 in Eingriff mit der Nut 21 des Gehäusekörpers 3 gebracht. Sobald der radiale Vorsprung 17 in Eingriff mit der Nut 21 ist, befindet sich der Zusatzhandgriff 5 in der ersten axialen Montageposition. In dieser axialen Montageposition ist er in axialer Richtung 9 weiter auf den Gehäusekörper 3 aufschiebbar, jedoch gegen ein Abziehen vom Gehäusekörper 3 durch die von dem radialen Vorsprung 17 und der Nut 21 gebildete Abziehsicherungsvorrichtung 15 gehalten. Durch manuelles Verschieben in axialer Richtung 9 auf den Gehäusekörper 3 zu wird der Zusatzhandgriff 5 so verschoben, dass die Aussparungen 13 am Spannkragen 7 des Zusatzhandgriffs 5 in Eingriff mit den Nocken 11 des Gehäusekörpers 3 gelangen. Durch das Zusammenwirken von Aussparungen 13 und Nocken 11 ist der Zusatzhandgriff 5 formschlüssig verdrehgesichert am Gehäusekörper 3 gehalten, was die zweite axiale Montageposition definiert. Durch weiteres Betätigen des Spannkragens 7 wird der Innendurchmesser 21 weiter verringert, so dass der Zusatzhandgriff in der zweiten axialen Montageposition axial unverschieblich geklemmt ist, so dass mit dem Elektrohandwerkzeuggerät 1 sicher gearbeitet werden kann.

Zum Verdrehen des Zusatzhandgriffs 5 um die axiale Richtung 9 wird der Spannkragen 7 lediglich so weit gelöst, dass eine Verschiebung aus der zweiten axialen Montageposition in die erste axiale Montageposition ermöglicht ist. In dieser ist der Zusatzhandgriff 5 um die axiale Richtung 9 verdrehbar und vermittels der Abziehsicherungsvorrichtung 15 gegen ein unbeabsichtigtes axiales Abziehen gesichert.

## Patentansprüche

1. Elektrohandwerkzeuggerät (1) mit einem Gehäusekörper (3) und mit einem einen Spannkragen (7) aufweisenden und in einer axialen Richtung (9) auf den Gehäusekörper (3) aufschiebbaren Zusatzhandgriff (5), wobei der Zusatzhandgriff (5) in einer ersten axialen Montageposition um die axiale Richtung (9) drehbar und in einer zweiten weiter auf den Gehäusekörper (3) aufgeschobenen axialen Montageposition formschlüssig verdrehgesichert am Gehäusekörper (3) gehalten ist, und mit einer in axiale Richtung (9) wirkenden Abziehsicherungsvorrichtung (15), welche ein Eingriffsmittel (19) und ein in Umfangsrichtung erstrecktes Aufnahmemittel (23) aufweist, **dadurch gekennzeichnet, dass** das in Umfangsrichtung erstreckte Aufnahmemittel (23) zugleich in axialer Richtung (9) derart erstreckt ist, dass das Eingriffsmittel (19) sowohl in der ersten als auch in der zweiten axialen Montageposition des Zusatzhandgriffs (5) in Eingriff mit dem Aufnahmemittel (23) ist und dass das Aufnahmemittel (23) dabei einen axialen Anschlag bildet, um zu verhindern, dass der Zusatzhandgriff (5) unbeabsichtigt von dem Gehäusekörper (3) abgezogen wird, wenn er von der zweiten in die erste axiale Montageposition bewegt wird, um den Zusatzhandgriff (5) zu verdrehen.

2. Elektrohandwerkzeuggerät (1) nach einem der vorhergehenden Ansprüche, **dadurch gekennzeichnet, dass** das Eingriffsmittel (19) durch einen radialen Vorsprung (17) am Zusatzhandgriff (5) gebildet ist.

3. Elektrohandwerkzeuggerät (1) nach einem der vorhergehenden Ansprüche, **dadurch gekennzeichnet, dass** das Aufnahmemittel (23) eine in Umfangsrichtung erstreckte Nut (21) im Gehäusekörper (3) umfasst.

4. Elektrohandwerkzeuggerät (1) nach Anspruch 3, **dadurch gekennzeichnet, dass** die Nut (21) in Umfangsrichtung durchgehend ausgebildet ist.

5. Elektrohandwerkzeuggerät (1) nach einem der vorhergehenden Ansprüche, **dadurch gekennzeichnet, dass** der Gehäusekörper (3) mindestens einen Vorsprung oder Nocken (11) aufweist, der mit komplementären Aussparungen (13) im Zusatzhandgriff (5) die formschlüssige Verdrehsicherung bildet.

6. Elektrohandwerkzeuggerät (1) nach Anspruch 5, **dadurch gekennzeichnet, dass** der Gehäusekörper (3) mehrere Vorsprünge oder Nocken (11) aufweist, wobei die Vorsprünge oder Nocken (11) mit gleichmäßigem Abstand zueinander in Umfangsrichtung am Gehäusekörper (3) angeordnet sind, so dass der Zusatzhandgriff (5) in einer Vielzahl von Positionen relativ zur axialen Richtung (9) formschlüssig verdrehgesichert festlegbar ist.

## Claims

1. Electric hand tool (1) comprising a housing body (3) and an add-on hand grip (5) which has a clamping collar (7) and which can be pushed onto the housing body (3) in an axial direction (9), wherein the add-on hand grip (5) in a first axial mounting position is rotatable about the axial direction (9) and in a second axial mounting position, in which it is pushed further onto the housing body (3), is held with a form fit in a non-rotatable manner on the housing body (3), and comprising an anti-detachment device (15) which acts in the axial direction (9) and which has an engagement means (19) and a receiving means (23) extending in the circumferential direction, **characterised in that** the receiving means (23) extending in the circumferential direction at the same time extends in the axial direction (9) in such a way that the engagement means (19) is in engagement with the receiving means (23) both in the first and in the second axial mounting position of the add-on hand grip (5), and **in that** the receiving means (23) forms an axial stop to prevent the add-on hand grip (5) from being inadvertently detached from the housing body (3) when it is moved from the second into the first axial mounting position in order to rotate the add-on hand grip (5).

2. Electric hand tool (1) according to one of the preceding claims, **characterised in that** the engagement means (19) is formed by a radial protrusion (17) on the add-on hand grip (5).

3. Electric hand tool (1) according to one of the preceding claims, **characterised in that** the receiving means (23) comprises a groove (21) extending in the circumferential direction in the housing body (3).

4. Electric hand tool (1) according to claim 3, **characterised in that** the groove (21) is continuous in the circumferential direction.

5. Electric hand tool (1) according to one of the preceding claims, **characterised in that** the housing body (3) has at least one protrusion or cam (11) which, together with complementary cutouts (13) in the add-on hand grip (5), forms the form-fitting anti-rotation means.

6. Electric hand tool (1) according to claim 5, **characterised in that** the housing body (3) has a plurality of protrusions or cams (11), wherein the protrusions or cams (11) are arranged at an equal distance from one another in the circumferential direction on the housing body (3), so that the add-on hand grip (5) can be fixed with a form fit in a non-rotatable manner in a plurality of positions relative to the axial direction (9).

## Revendications

1. Outil électrique portable (1), comportant un carter (3) et comportant une poignée supplémentaire (5) munie d'un collet de serrage (7) et pouvant être montée par coulissement dans une direction axiale (9) sur le carter (3), ladite poignée supplémentaire (5), dans une première position de montage axiale, étant apte à tourner autour de la direction axiale (9) et, dans une deuxième position de montage axiale, coulissée davantage sur le carter (3), étant maintenue immobile en rotation par conjugaison de forme sur le carter (3), et comportant un dispositif anti-désolidarisation (15) agissant dans la direction axiale (9), lequel comporte un moyen d'engrènement (19) et un moyen de réception (23) qui s'étend dans la direction circonférentielle, **caractérisé en ce que** le moyen de réception (23), qui s'étend dans la direction circonférentielle, s'étend en même temps dans la direction axiale (9), de telle sorte que le moyen d'engrènement (19) tant dans la première que dans la deuxième position de montage axiale de la poignée supplémentaire (5) est en engrènement avec le moyen de réception (23), et **en ce que** le moyen de réception (23) forme, en outre, une butée axiale pour empêcher que la poignée supplémentaire (5) puisse être désolidarisée accidentellement du carter (3) lorsqu'elle est déplacée de la première dans la deuxième position de montage axiale afin de pouvoir tourner la poignée supplémentaire (5).

2. Outil électrique portable (1) selon l'une des revendications précédentes, **caractérisé en ce que** le moyen d'engrènement (19) est formé par une saillie radiale (17) sur la poignée supplémentaire (5).

3. Outil électrique portable (1) selon l'une quelconque des revendications précédentes, **caractérisé en ce que** le moyen de réception (23) comporte une rainure (21) dans le carter (3), laquelle s'étend dans la direction circonférentielle.

4. Outil électrique portable (1) selon la revendication 3, **caractérisé en ce que** la rainure (21) est réalisée en continu dans la direction circonférentielle.

5. Outil électrique portable (1) selon l'une quelconque des revendications précédentes, **caractérisé en ce que** le carter (3) comporte au moins une saillie ou ergot (11) qui, conjointement avec des évidements (13) complémentaires dans la poignée supplémentaire (5), forme le système d'immobilisation en rotation par conjugaison de forme.

6. Outil électrique portable (1) selon la revendication 5, **caractérisé en ce que** le carter (3) comporte plusieurs saillies ou ergots (11), les saillies ou ergots (11) étant disposés à distance régulière les uns des autres dans la direction circonférentielle sur le carter (3), de telle sorte que la poignée supplémentaire (5) peut être fixée immobile en rotation par conjugaison de forme dans une pluralité de positions par rapport à la direction axiale (9).
